Europäisches Patentamt

European Patent Office

Office européen des brevets

(19)

(11) **EP 0 714 065 A1**

(12) **DEMANDE DE BREVET EUROPEEN**

(43) Date de publication:
    **29.05.1996  Bulletin 1996/22**

(51) Int Cl.$^6$: **G06F 12/06**

(21) Numéro de dépôt: **95402618.3**

(22) Date de dépôt: **21.11.1995**

(84) Etats contractants désignés:
    **DE ES GB IT**

(30) Priorité: **24.11.1994  FR 9414101**

(71) Demandeur: **ALCATEL BUSINESS SYSTEMS
    F-75008 Paris (FR)**

(72) Inventeurs:
    • **Kania, Bertrand
      F-75011 Paris (FR)**

    • **Kopp, Dieter
      D-71282 Hemmingen (DE)**

(74) Mandataire: **Schaub, Bernard
    c/o SOSPI
    14-16 rue de la Baume
    F-75008 Paris (FR)**

(54) **Interface entre une mémoire comportant un nombre donné d'entrées d'adresse et un processeur prévu avec moins de sorties d'adresse, processeur et mémoire ainsi équipés**

(57)     Interface entre mémoire (1) et processeur (2), pour mémoire, qui stocke les données sous la forme d'octets et qui comporte "n" entrées de bit d'adresse (AI0 à AI18) et pour processeur, qui comporte un nombre "p" de sorties d'adresse (AO0 à AO14) inférieur à "n".

Elle comporte un circuit logique (3) relié à diverses sorties du processeur, pour produire un bit qui est destiné à l'entrée de bit d'adresse de poids faible de la mémoire, qui est défini par la relation AI0 = R/W & $\overline{\text{byte-s}}$ OU $\overline{\text{R/W}}$ & $\overline{\text{I/O0}}$.

"p" entrées d'adresse de la mémoire sont reliées aux "p" sorties (AO0 - AO14) d'adresse du processeur et les entrées restantes de bits d'adresse (AI1 à AI15) sont reliées à des sorties programmables (I/O1 à I/O3).

EP 0 714 065 A1

## Description

L'invention concerne une interface prévue entre une mémoire de données comportant un nombre donné d'entrées de bit d'adresse et un processeur qui est prévu avec un nombre inférieur de sorties de bit d'adresse et qui dispose de sorties de bit programmables dont au moins certaines sont susceptibles d'être utilisées pour compléter l'adressage. Elle concerne aussi les processeurs et mémoires équipés d'une telle interface.

Des processeurs, notamment des processeurs de traitement de signaux, sont dotés d'accès organisés d'une manière standardisée leur permettant de communiquer avec des mémoires vives, classiquement dites mémoires RAM, ou des mémoires mortes, dites ROM. De telles mémoires et de tels processeurs sont le plus souvent interconnectés par des liaisons multifilaires de transmission de données permettant par exemple une transmission de huit ou seize bits en parallèle et des liaisons d'adressage pour mémoires externes à "p" fils, "p" étant par exemple égal à seize.

Or il existe des mémoires, par exemple des mémoires à lecture seule électriquement inscriptibles et effaçables, dites mémoires EEPROM FLASH, qui sont susceptibles de comporter un nombre "n" d'entrées de bit d'adresse supérieur au nombre "p" de sorties de bit d'adresse pour mémoire externe de certains processeurs disponibles et en particulier de certains processeurs de traitement de signaux. Tel est le cas si l'on associe des mémoires de type dit EEPROM FLASH comportant dix-neuf entrées de bit d'adresse à un processeur de traitement de signal ne fournissant normalement qu'un signal d'adresse sur seize bits soit donc via seize sorties.

Comme il est connu ces mémoires, de type EEPROM FLASH, présentent l'avantage d'être électriquement effaçables, comme le sont les mémoires, de type RAM, et de conserver par elles-mêmes les données que l'on y stocke même si elles ne sont plus alimentées, comme le font les mémoires de type ROM et contrairement aux mémoires de type RAM exploitées sans alimentation de sauvegarde. Il existe donc un certain nombre d'applications où l'exploitation de ces mémoires EEPROM FLASH est envisagée à des fins de stockage temporaire en statique, sans risque de perte, d'autant plus que ces mémoires sont réalisées sous la forme de circuits modulaires disposant d'une grande capacité en matière de stockage. Tel est par exemple le cas dans les applications relatives aux télécommunications où il est utile de pouvoir stocker, sans risque de perte dû à une absence d'alimentation en énergie électrique en cours de stockage, des informations numériques classiquement conservées sous forme d'octets pour un temps déterminé. Il est ainsi possible d'envisager l'exploitation de ces mémoires pour stocker les messages vocaux au niveau de répondeurs enregistreurs téléphoniques individuels ou partagés.

Toutefois les mémoires, de type EEPROM FLASH, qui ont des capacités suffisamment intéressantes, par exemple une capacité de 512 kilo-octets, exigent des possibilités d'adressage étendues de la part des processeurs ayant à les commander, les divers octets de ces mémoires effaçables par blocs de tailles prédéterminées étant individuellement adressables en écriture ainsi qu'en lecture.

Or si les processeurs peuvent ordinairement adresser des capacités de mémoire de cet ordre, ils ne sont souvent pas prévus pour effectuer de tels adressages pour des mémoires externes ayant de telles capacités et les utilisateurs n'ont généralement pas la possibilité de modifier les composants que constituent ces processeurs pour obtenir les possibilités d'adressage qu'ils souhaitent.

L'invention propose donc une interface entre mémoire et processeur permettant des échanges de données par l'intermédiaire d'une liaison, pour mémoire qui stocke les données reçues sous la forme d'octets et qui comporte "n" entrées de bit d'adresse permettant un adressage de chaque octet au moyen d'une combinaison caractéristique de "n" bits, et pour processeur qui comporte un nombre "p" de sorties de bit d'adresse inférieur à "n" et un nombre "q" de sorties de bit programmables au moins égal à "n-p".

Selon une caractéristique de l'invention, l'interface comporte un circuit logique binaire relié à une sortie de bit de sélection d'octet "byte-s", à une sortie de bit de commande d'écriture-lecture "R/W" en mémoire et à l'une des "q" sorties de bit programmables dûment programmée du processeur pour produire un bit qui est destiné à l'entrée de bit d'adresse de poids le plus faible de la mémoire et qui est défini par la relation AI0 = R/W & $\overline{\text{byte-s}}$ OU $\overline{\text{R/W}}$ & $\overline{\text{I/O0}}$, en ce qu'elle relie les "p" entrées de bit d'adresse de la mémoire, qui succèdent par ordre de poids croissant à l'entrée de bit d'adresse de poids le plus faible, aux "p" sorties de bit du processeur prises dans le même ordre et en ce qu'elle relie les "n-p-1" entrées restantes de bit d'adresse de mémoire ayant les poids les plus forts à autant de sorties de bit programmables dûment programmées du processeur.

Selon une caractéristique de l'invention, le circuit logique qu'elle comporte est aussi relié à une sortie de bit d'attaque (strb) du processeur et génère aussi un bit de commande d'écriture défini par la relation $\overline{\text{WR}}$ = $\overline{\text{strb}}$ & $\overline{\text{R/W}}$ & $\overline{\text{byte-s}}$ et un bit d'autorisation de sortie défini par la relation $\overline{\text{OE}}$ = $\overline{\text{strb}}$ & R/W pour des entrées correspondantes de la mémoire.

L'invention propose aussi une variante d'interface pour mémoire composée d'au moins deux unités identiques en parallèle qui disposent chacune de "n" entrées d'adresse de bit, d'une entrée de bit de commande d'écriture-lecture, d'une entrée de bit d'autorisation de sortie et d'une entrée de bit de sélection d'unité.

Selon une caractéristique de l'invention, le circuit logique qu'elle comporte est relié en parallèle aux différentes entrées de bit de poids faible, de bit d'écriture et de bit d'autorisation de sortie de chacune des unités, l'entrée de sélection propre à chacune des unités étant reliées à une sortie différente de bit de donnée du processeur qui est programmée à cet effet.

L'invention propose encore un processeur et une mémoire caractérisés en ce qu'ils comportent l'un ou l'autre une interface telle que définie ci-dessus.

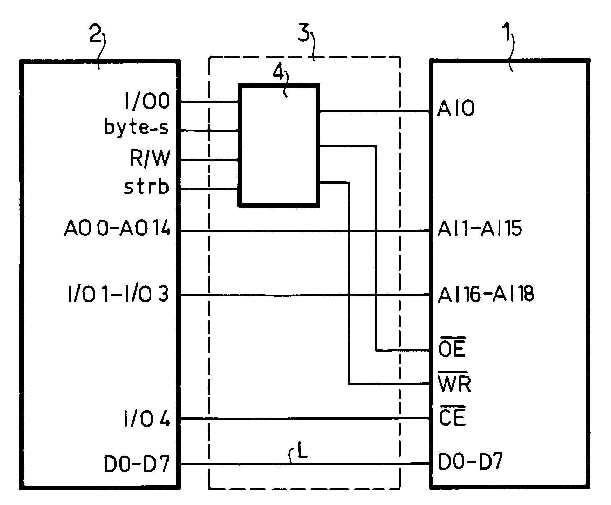

L'invention, ses caractéristiques et ses avantages sont précisés dans la description qui suit en liaison avec la figure évoquée ci-dessous.

La figure unique présente un schéma d'interface pour processeur et mémoire, cette dernière comportant un nombre d'entrées d'adresse qui est supérieur au nombre de sorties d'adresse que comporte le processeur.

L'agencement présenté en figure unique est destiné à permettre la commande d'une mémoire 1 à partir d'un processeur 2, lorsque la mémoire 1 qui stocke les données sous la forme d'octets comporte un nombre "n" d'entrées de bit, permettant d'adresser chaque octet au moyen d'une combinaison caractéristique de "n" bits, supérieur au nombre "p" de sorties de bit d'adresse du processeur. Il est alors prévu d'exploiter pour l'adressage de la mémoire des sorties de bit programmables à la demande dont est doté le processeur, étant supposé ici que le nombre "q" de sorties de bit programmables dont il est possible de disposer au niveau du processeur est au moins égal à "n-p".

Dans un exemple de réalisation, la mémoire 1 comporte par exemple un nombre "n" d'entrées de bit d'adresse, ici référencées "AI0" à "AI18", qui est égal à dix neuf, alors que le processeur 2 est un processeur de traitement de signal qui comporte un accès standard pour mémoire de type à accès aléatoire, dite RAM, ou à lecture seule, dite ROM. Comme connu ce processeur 1 est équipé d'une base de temps non représentée qui lui fournit les signaux d'horloge nécessaires à son fonctionnement.

L'accès standard comporte un nombre "p" de sorties de bit d'adresse, référencés "AO0" à "AO14", qui est égal à quinze pour le signal d'adresse. Il comporte aussi des entrées-sorties, ici supposées exploitées en tant que sorties de bit programmables, qui sont montrées au nombre de cinq et référencées "I/O1" à "I/O4", ainsi qu'une sortie de bit de commande d'écriture-lecture "R/W", une sortie de bit de commande de sélection d'octet, ici référencée "byte-s" et une sortie de bit d'attaque "strb".

Le processeur 2 et la mémoire 1 sont interconnectés par l'intermédiaire d'une interface 3 qui comporte ici un circuit logique binaire 4 et un certain nombre de liaisons dont une liaison "L" qui permet des transferts de données, octet par octet, entre mémoire et processeur et inversement, cette liaison "L" est par exemple composée de huit fils parallèles ici référencés "D0" à "D7".

L'interface 3 est insérée entre la mémoire 1 et le processeur 2 dans l'agencement, par exemple à l'intérieur de l'unité de commande 2, ou autrement, éventuellement au niveau d'un montage intermédiaire comme montré sur la figure unique.

Dans la réalisation envisagée, une première entrée de bit d'adresse, soit ici "AI0", de la mémoire 1 est relié en sortie du circuit logique 3, "p" autres entrées de bit d'adresse, soit ici les quinze entrées "AI1" à "AI15" de la mémoire 1 sont reliées aux "p" sorties de bit d'adresse "AO0" à "AO14" du processeur 2. Les trois entrées de bit d'adresse "AI16" à "AI18", ici restantes, de la mémoire 1 sont reliées aux trois entrées-sorties "I/O1" à "I/O3" du processeur 2, exploitées en tant que sorties de bit programmables, un programme de type répétitif classique, établi à la demande, étant exploité pour permettre de les faire fonctionner comme des sorties de bit d'adresse.

Le circuit logique 3 est relié à l'entrée-sortie "I/O0", à la sortie de bit de commande de sélection d'octet "byte-s", à la sortie de bit d'attaque "strb" et à la sortie de signal de commande d'écriture-lecture "R/W" du processeur 2. Cette interface 3 est agencée pour commander l'entrée de bit d'adresse de poids faible AI0 de la mémoire 1, la valeur du bit appliqué à cette entrée est définie par l'équation: $AI0 = R/W \ \& \ \overline{byte\text{-}s} \ OU \ \overline{R/W} \ \& \ \overline{I/O0}$.

La commande d'écriture-lecture "R/W" est classiquement à un niveau binaire "zéro" en phase d'écriture et à un niveau "un" en phase de lecture.

La sortie de commande de sélection d'octet "byte-s" est prévue sur les processeurs de traitement de signaux qui en sont dotés pour permettre l'écriture et la lecture d'un mot de seize bits dans une mémoire à stockage par octet, deux accès pour un octet étant successivement effectués vers la mémoire, le bit de commande étant à un niveau binaire "zéro" pour un premier octet puis à un niveau binaire "un" pour l'octet suivant.

Il est donc prévu ici d'exploiter cette commande de sélection d'octet puisqu'il est prévu un transfert de données par octet entre la mémoire 1 et le processeur 2. Par programmation adéquate du processeur deux octets formant un même mot de seize bits et considérés comme ayant l'un un poids faible et l'autre un poids fort peuvent donc être successivement adressés.

Chaque emplacement d'octet en mémoire 1 est donc ici adressable par le processeur 2 au moyen de la combinaison d'un bit de poids faible obtenu à partir de la relation AI0 définie ci-dessus, des bits d'adresse fournis par les sorties de bit d'adresse A00 à AO14 et des bits d'adresse de poids fort émanant des sorties de bit programmables que constituent ici les entrées-sorties I/O1 à I/O3 programmées en conséquence.

Le circuit logique 4 pilote une entrée de bit de commande d'écriture "$\overline{WR}$" de la mémoire 2, en fonction des signaux fournis par la sortie de bit de commande d'écriture-lecture en mémoire "R/W", par la sortie de bit de sélection d'octet (byte-s) et par la sortie de bit d'attaque "strb" du processeur 1 auxquelles ce circuit logique est relié, le bit de commande $\overline{WR}$ étant défini par la relation $\overline{WR} = \overline{strb} \ \& \ \overline{R/W} \ \& \ \overline{byte\text{-}s}$.

La sortie de bit d'attaque "strb" du processeur 2 produit une impulsion correspondant à un niveau binaire "zéro" pour chaque octet.

Le circuit logique 4 pilote aussi une entrée de bit d'autorisation de sortie $\overline{OE}$ de la mémoire 1 en fonction des signaux fournis par la sortie de bit de commande d'écriture-lecture en mémoire et par la sortie de bit d'attaque "strb" du processeur 1 auxquelles il est relié, le bit d'autorisation de sortie est défini par la relation $\overline{OE}$ = $\overline{strb}$ & R/W.

Une entrée de bit de sélection d'unité "$\overline{CE}$" que comporte la mémoire 1 est pilotée par l'intermédiaire d'une entrée-sortie I/O4 du processeur 2 qui est exploitée en tant que sortie de bit programmable, le processeur étant programmé pour permettre l'exploitation de la mémoire, lorsqu'il en est besoin.

En conséquence le processeur 2 intervient notamment pour les opérations d'adressage d'octet en phase d'écriture par l'intermédiaire de son entrée/sortie "I/O0" exploitée en tant que sortie de bit programmable et programmée comme indiqué ci-dessus afin de commander l'entrée de bit d'adresse "AI0" de la mémoire, pour chaque octet. Le bit de commande en écriture $\overline{WR}$ se traduit par une impulsion qui correspond à l'une ou l'autre des bits de niveau binaire zéro successivement produits par la sortie de bit d'attaque "strb" du processeur suivant le niveau du bit présent à la sortie de bit de sélection d'octet "byte-s".

Le processeur 2 intervient lors des opérations d'adressage en lecture d'octet notamment par l'intermédiaire de sa sortie de bit de sélection d'octet "byte-s" qui permet de sélectionner successivement deux octets qui sont considérés l'un comme de poids faible et l'autre comme de poids fort par le processeur. La commande en lecture de la mémoire est essentiellement pilotée par la sortie de bit d'attaque "strb" du processeur.

Il est possible de commander en plusieurs unités de mémoire 1 identiques à la mémoire 1 envisagée ci-dessus, lorsque celles-ci sont montées en parallèle, en affectant une entrée-sortie différente du processeur à chaque unité constituant alors la mémoire pour commander les entrées de bit de sélection d'unité respectives de ces unités.

Les entrées d'adresse de bit de ces unités de mémoire sont alors reliées en parallèle soit en sortie du circuit logique 3 pour celle recevant le bit d'adresse de poids le plus faible, soit aux sorties de bit d'adresse du processeur comme l'est une mémoire 1 unique. Il en est de même pour les entrées de bit de commande d'écriture-lecture "$\overline{WR}$", de bit d'autorisation de sortie "$\overline{OE}$" et pour les entrées-sorties de données "D0" à "D7" par l'intermédiaire desquelles les octets de données sont échangés avec le processeur. Ce dernier a donc la possibilité de sélectionner l'unité de mémoire à laquelle il veut s'adresser en agissant sur celle de ses propres entrées-sorties qui est reliée à l'entrée de bit de sélection d'unité "$\overline{CE}$" de cette unité, l'adressage et les opérations d'écriture et de lecture étant par ailleurs identiques pour toutes les unités.

## Revendications

1. Interface entre mémoire (1) et processeur (2) permettant des échanges de données par l'intermédiaire d'une liaison (L), pour mémoire, qui stocke les données sous la forme d'octets et qui comporte "n" entrées de bit d'adresse (AI0 à AI18) permettant l'adressage de chaque octet au moyen d'une combinaison caractéristique de "n" bits, et pour processeur, qui comporte un nombre "p" de sorties de bit d'adresse (AO0 à AO14) inférieur à "n" et un nombre "q" de sorties de bit de donnée programmable (I/O0 à I/O4) au moins égal à "n-p", caractérisée en ce qu'elle comporte un circuit logique binaire (3) relié à une sortie de bit de sélection d'octet (byte-s), à une sortie de bit de commande d'écriture-lecture en mémoire (R/W) et à l'une des "q" sorties de bit programmables (I/O0) dûment programmée du processeur, pour produire un bit AI0 qui est destiné à l'entrée (AI0) de bit d'adresse de poids le plus faible de la mémoire et qui est défini par la relation AI0 = R/W & $\overline{byte\text{-}s}$ OU $\overline{R/W}$ & $\overline{I/O0}$, en ce qu'elle relie les "p" entrées de bit d'adresse de la mémoire, qui succèdent par ordre de poids croissant à l'entrée de bit d'adresse de poids le plus faible, aux "p" sorties de bit (AO0 - AO14) d'adresse du processeur prises dans le même ordre et en ce qu'elle relie les "n-p-1" entrées restantes de bits d'adresse (AI1 à AI15) de mémoire ayant les poids les plus forts à autant de sorties de bit programmables (I/O1 à I/O3) du processeur dûment programmées à cet effet.

2. Interface, selon la revendication 1, caractérisé en ce que le circuit logique binaire qu'elle comporte est aussi relié à une sortie de bit d'attaque (strb) du processeur et génère un bit de commande d'écriture $\overline{WR}$ défini par la relation $\overline{WR}$ = $\overline{strb}$ & $\overline{R/W}$ & $\overline{byte\text{-}s}$ et un bit d'autorisation de sortie $\overline{OE}$ défini par la relation $\overline{OE}$ = $\overline{strb}$ & R/W pour les entrées correspondantes ($\overline{WR}$) et ($\overline{OE}$) de la mémoire.

3. Interface, selon la revendication 2, pour mémoire composée d'au moins deux unités (1) identiques en parallèle qui disposent chacune de "n" entrées d'adresse de bit (AI0 à AI18), d'une entrée de bit de commande d'écriture-lecture ($\overline{WR}$), d'une entrée de bit d'autorisation de sortie ($\overline{OE}$) et d'une entrée de bit de sélection d'unité ($\overline{CE}$), caractérisée en ce que le circuit logique qu'elle comporte est relié en parallèle aux différentes entrées de bit de poids faible, de bit d'écriture et de bit d'autorisation de sortie de chacune des unités, l'entrée de sélection ($\overline{CE}$) propre à chacune des unités étant reliées à une sortie de bit programmable du processeur qui diffère avec chaque unité et qui est programmée en conséquence.

4. Processeur caractérisé en ce qu'il comporte une interface selon au moins l'une des revendications 1 à 3.

5. Mémoire caractérisée en ce qu'elle comporte une interface selon au moins l'une des revendications 1 à 3.

EP 0 714 065 A1

**Office européen des brevets**    **RAPPORT DE RECHERCHE EUROPEENNE**

Numéro de la demande

EP 95 40 2618

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | ELECTRONIQUE, no. 20, 1 Septembre 1992 pages 53-55, XP 000311629 BACOT P 'LA TECHNIQUE DE PAGINATION MEMOIRE APPLIQUEE AU 8051' * figure 1 * --- | 1,4,5 | G06F12/06 |
| A | EDN ELECTRICAL DESIGN NEWS, vol. 35, no. 21, 11 Octobre 1990 pages 213-217, XP 000165309 ORLANDO R 'EEPROMS ENHANCE MICROCONTROLLER-BASED SYSTEM PERFORMANCE' * page 213, colonne de droite, ligne 7 - page 214, colonne de gauche, ligne 23 * * figures 1,2 * --- | 1-5 | |
| A | ELEKTRONIK, vol. 40, no. 25, 10 Décembre 1991 pages 108-111, XP 000269997 BERNSTEIN H '10 JAHRE DATENERHALT OHNE PUFFER UND WARTUNG' * page 111, colonne de gauche, ligne 26 - colonne de droite, ligne 2; figures 2,3 * ----- | 1-5 | |

DOMAINES TECHNIQUES
RECHERCHES (Int.Cl.6)

G06F

Le présent rapport a été établi pour toutes les revendications

| Lieu de la recherche | Date d'achèvement de la recherche | Examinateur |
|---|---|---|
| LA HAYE | 11 Mars 1996 | Nielsen, O |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

7